# FASCICULE DE BREVET EUROPEEN

(11) **EP 2 465 355 B1**
(45) Date de publication et mention de la délivrance du brevet: **05.11.2014**
(21) Numéro de dépôt: 11290581.5
(22) Date de dépôt: 15.12.2011
(51) Int. Cl.: A23B 4/005, A23B 4/26, A23L 3/3589, A22C 11/00

(54) **Dispositif et procédé de traitement thermique de produits alimentaires**
Vorrichtung und Verfahren zur Wärmebehandlung von Lebensmitteln
Device and method for thermal treatment of food products

(30) Priorité: 15.12.2010 FR 1004909
(43) Date de publication de la demande: 20.06.2012
(73) Titulaire: Armor Inox, F-56430 Mauron (FR)
(72) Inventeur: Cadoret, Bernard, 35650 Le Rheu (FR); Dreano, Jean-Luc, 56800 Ploermel (FR)
(74) Mandataire: Maillet, Alain

(56) Documents cités:
- FR-A- 1 095 351
- FR-A1- 2 691 881
- US-A1- 2009 004 346

## Description

La présente invention concerne le traitement thermique de produits alimentaires sensibles, par exemple de type saucisse.

Traditionnellement, ce type de produit est poussé dans un boyau naturel dont la disponibilité n'est pas toujours assurée et les coûts fluctuent largement.

Des alternatives au boyau naturel existent depuis quelques années , sous la forme de gels comestibles appliqués en surface des produits et formant une enveloppe autour du produit. Cette enveloppe est cependant extrêmement fragile et collante ce qui génère des risques d'adhésion des produits entre eux ou avec des éléments d'une ligne de fabrication.

De tels produits peuvent être cuits à la vapeur. Leur manipulation est cependant délicate. Les rendements thermique et produit d'une telle cuisson sont rarement satisfaisant.

L'invention s'intéresse également au traitement de produits alimentaires dépourvus d'enveloppe. Certains produits alimentaires sans peau doivent être manipulés avec beaucoup de précautions tout en respectant de strictes règles d'hygiène.

US 2009/004346 divulgue un dispositif de marinade sous vide de produits alimentaires pouvant être combiné à un traitement thermique de produits alimentaires, caractérisé par le fait qu'il comprend un réceptacle destiné à recevoir des produits alimentaires, un bain de marinade à l'intérieur de la chambre à l'aval du réceptacle, le réceptacle ayant une section en forme de goulotte, et une écluse disposée en aval du réceptacle. Cependant, le réceptacle du dispositif de US2009/004346 ne comprend pas d'alimentation en eau de traitement thermique, la dite eau entraînant les produits alimentaires.

FR 2691881 divulgue un dispositif de traitement thermique des aliments comprenant un réceptacle, une écluse, située sous le réceptacle, une alimentation en eau en aval de l'écluse entraînant les produits alimentaires à traiter à l'intérieur de l'enceinte de bain de traitement, la dite enceinte comprenant des pales. Cependant, dans le dispositif de FR 2691881, l'eau ne circule pas dans le réceptacle et d'autre part, les pales ne sont pas synchronisées avec l'ouverture de l'écluse. Par ailleurs, les aliments à traiter sont projetés vers une grille fixe qui dirige les aliments à traiter dans les compartiments.

### L'invention vient améliorer la situation.

A cet effet, un dispositif de traitement thermique de produits alimentaires comprend un réceptacle destiné à recevoir des produits alimentaires et un bain de traitement thermique à l'aval du réceptacle. Le réceptacle possède une section en forme de goulotte. Le réceptacle comprend une alimentation en eau de traitement thermique avec entraînement des produits alimentaires par l'eau dans le réceptacle. Une écluse est disposée en aval du réceptacle. L'écluse a au moins une position d'ouverture laissant passer l'eau de traitement thermique et les produits alimentaires entraînés par l'eau de traitement thermique, et une position de fermeture retenant les produits alimentaires dans de l'eau de traitement thermique. Le bain de traitement thermique comprend un bac à eau de traitement thermique disposé en aval de l'écluse. Le bain de traitement thermique comprend un organe de temporisation de durée de traitement thermique. L'organe de temporisation est pourvu de palettes. L'écluse est synchronisée avec l'organe de temporisation en position de fermeture lorsqu'une palette est en regard de l'écluse et en position d'ouverture lorsque l'accès au bac à eau de traitement thermique est libre.

Le produit alimentaire peut être reçu dans le réceptacle alimenté en eau. Le produit alimentaire est entraîné par l'eau, puis selon la position de l'écluse, soit entraîné dans le bain de traitement thermique, soit retenu temporairement dans l'écluse lorsqu'une palette est en regard de l'écluse évitant ainsi le choc du produit alimentaire contre la palette. Le produit alimentaire temporairement retenu est libéré lors de l'ouverture de l'écluse et entraîné dans le bain de traitement thermique. Le produit alimentaire progresse alors dans le bain de traitement thermique pendant la durée nécessaire à sa cuisson. L'eau alimentant le réceptacle étant une eau de traitement thermique, la cuisson du produit alimentaire commence dès le réceptacle. L'eau assure une multiple fonction de transport, de protection et de cuisson. Le traitement thermique commençant dès le contact avec l'eau de traitement thermique dans le réceptacle, la fragilité du produit alimentaire liée à l'absence de peau ou à la présence d'une peau non stabilisée et collante s'en trouve très tôt diminuée. Grâce à l'écluse, le produit alimentaire reste dans l'eau de traitement thermique de façon sensiblement continue entre la réception dans le réceptacle et l'arrivée dans le bain de traitement thermique. On assure ainsi une continuité de traitement thermique tout en évitant une déformation des produits liée à des chocs entre eux ou à leur disposition sur une surface ayant pour effet de modifier leur géométrie. L'eau alimentant le réceptacle peut provenir du bain de traitement thermique. La cuisson du produit alimentaire peut commencer dès le réceptacle.

Dans un mode de réalisation, l'alimentation en eau de traitement thermique dans le réceptacle est continue. On peut utiliser une pompe à fonctionnement continu. Un stockage d'eau intermédiaire entre la pompe et le réceptacle est facultatif. Un stockage d'eau intermédiaire permet par exemple de mettre en place un chauffage par échangeur afin de maintenir constante la température dans le réceptacle ou une filtration ou écrémage superficiel permettant d'éliminer des matières en suspension.

Dans un mode de réalisation, le réceptacle est évasé vers l'aval. Le réceptacle allant en s'élargissant en se rapprochant de l'écluse, le stockage temporaire de produits alimentaires dans l'écluse est facilité. La répartition des produits alimentaires dans l'écluse en position de fermeture est également facilitée.

Dans un mode de réalisation, le réceptacle comprend une partie voisine de l'écluse, ladite partie étant inclinée vers l'aval. L'inclinaison peut être comprise entre 5 et 25° par rapport à l'horizontale. L'inclinaison du réceptacle, en particulier du fond du réceptacle, au voisinage de l'écluse, permet lors de l'ouverture de l'écluse une vidange complète de celle-ci et des produits temporairement stockés. On entend ici par largeur de l'écluse la dimension perpendiculaire à l'axe d'écoulement de l'eau de traitement thermique en position d'ouverture de ladite écluse. L'inclinaison de la partie du réceptacle voisine de l'écluse permet également une certaine accélération du flux d'eau de traitement thermique par l'effet de la gravité, d'où un accroissement de la distance entre deux produits alimentaires. Ceci facilite un fonctionnement à cadence élevée tout en réduisant le risque de chocs entre deux produits alimentaires.

Dans un mode de réalisation, l'écluse comprend une porte articulée sur un axe horizontal. L'axe de la porte d'écluse peut être disposé selon la largeur de ladite écluse. L'axe horizontal permet un mouvement contrôlé de la porte entre la position de fermeture et la position d'ouverture et vice-versa. La porte, en position d'ouverture de l'écluse, est située à l'aval dudit axe horizontal. Lors du passage de la position d'ouverture à la position de fermeture, la porte se soulève vers le haut à l'opposé du sens d'écoulement de l'eau de traitement thermique. Tant que l'eau de traitement thermique, au cours du début du mouvement vers la position de fermeture, peut passer au dessus de la porte, les produits alimentaires peuvent également continuer à passer tout en restant sensiblement immergés. Dès que l'écoulement est fortement réduit, l'accumulation d'eau se produit dans l'écluse et les produits alimentaires cessent alors de passer au-dessus de la porte et sont maintenus dans l'eau de traitement thermique retenue dans l'écluse. On évite ainsi d'éventuels phénomènes de pincement du produit alimentaire ou encore de pertes prolongés de contacts du produit alimentaire avec l'eau de traitement thermique. La porte en position d'ouverture est disposée sous l'écoulement d'eau. Les risques de collage de produits alimentaires sur la porte sont réduits.

Dans un mode de réalisation, l'écluse comprend une porte munie d'au moins un perçage d'écoulement d'eau. Le perçage limite l'élévation du niveau de l'eau retenue dans l'écluse. On peut ainsi éviter un débordement d'eau par le bord supérieur de l'écluse en position de fermeture. Les produits alimentaires restent ainsi temporairement stockés dans la retenue d'eau de l'écluse. Le perçage peut être prévu à une hauteur choisie en vue d'une accumulation d'eau de traitement thermique sur une hauteur égale à plusieurs fois le diamètre des produits alimentaires, par exemple de dix à vingt fois le diamètre des produits alimentaires tout en évitant le débordement par-dessus la porte de l'écluse.

La porte de l'écluse peut comprendre, en position de fermeture de l'écluse, une portion inférieure sensiblement pleine pour favoriser une accumulation rapide d'eau de traitement thermique, une zone intermédiaire munie du ou des perçages et une zone supérieure sensiblement pleine. Une telle disposition s'avère bien adaptée pour des produits alimentaires ayant tendance à flotter. Pour des produits alimentaires de densité proche de celle de l'eau, les perçages pourront être ménagés à une hauteur supérieure, par exemple dans la zone supérieure de la porte.

Dans un mode de réalisation, l'écluse comprend une porte présentant des bords latéraux situés à une distance de bords fixes correspondants indépendante de la position de la porte. En d'autres termes, l'écluse est munie de parois latérales situées à une distance des bords latéraux de l'écluse faible par rapport au diamètre des produits alimentaires. Ladite distance peut être sensiblement constante au cours du mouvement de la porte. Le risque de pincement de produits alimentaires est réduit.

Dans un mode de réalisation, l'organe de temporisation assure en outre une fonction d'entraînement, une fonction de groupage et une fonction d'extraction des produits alimentaires en sortie. Les palettes de l'organe de temporisation séparent le bac à eau de traitement thermique en une pluralité de zones avec circulation d'eau de traitement thermique entre les zones et conservation des produits alimentaires au sein d'une même zone. Les palettes peuvent être ajourées. La hauteur d'eau de traitement thermique dans le bac est sensiblement conservée indépendamment de la position des palettes. Le temps de séjour d'un produit alimentaire dans le bac est déterminé par la vitesse des palettes. L'organe de temporisation peut comprendre une chaîne sans fin entraînée par roues dentées, la chaîne sans fin étant pourvue de maillons. Les palettes peuvent être supportées par des maillons. Les palettes peuvent être munies de perçages assurant la circulation d'eau de traitement thermique entre les zones. Le bac peut être sensiblement horizontal.

Dans un mode de réalisation, le réceptacle comprend une partie amont à niveau d'eau de traitement thermique indépendant de la position de l'écluse. On assure ainsi une réception des produits alimentaires adaptée à leurs caractéristiques, notamment de densité, de forme, etc. A la réception, les produits alimentaires peuvent être animés d'un mouvement ayant une composante horizontale et une composante verticale. Les produits alimentaires peuvent ainsi chuter dans l'eau de traitement thermique de la partie amont du réceptacle en provenance d'une autre machine, par exemple un organe de transfert ou encore une machine de découpe. Un niveau d'eau de traitement thermique indépendant de la position de l'écluse permet de réduire le risque de choc du produit alimentaire contre une paroi de fond de ladite partie amont.

Dans un mode de réalisation, la partie amont comprend une entrée d'eau de traitement thermique latérale par rapport au déplacement des produits alimentaires. Les turbulences dans l'eau de traitement thermique entraînent ainsi les produits et évitent que ces derniers plongent et stagnent au fond de cette zone d'entrée. La partie amont peut comprendre une sortie axiale d'eau de traitement thermique et de produits alimentaires. L'entrée d'eau latérale peut être disposée à proximité d'une paroi amont du réceptacle. L'eau s'écoule alors de façon suffisamment laminaire pour entraîner les produits alimentaires.

L'entrée d'eau de traitement thermique peut être bilatérale. On favorise la régularité de l'écoulement, au moins dans un plan vertical, d'où une réduction du risque de chocs de produits alimentaires contre une paroi latérale de la partie amont.

Dans un mode de réalisation, la partie amont comprend une ouverture supérieure de réception de produits alimentaires, un fond et une sortie d'eau de traitement thermique et de produits alimentaires vers l'écluse. La vitesse de l'eau à la sortie permet de régler la vitesse des produits alimentaires en sortie en fonction de la cadence de réception des produits alimentaires, par exemple sensiblement égale afin d'éviter une accumulation desdits produits alimentaires dans la partie amont. La partie amont peut comprendre une vanne de réglage de ladite sortie. La position de la vanne de réglage détermine à la fois la hauteur d'eau dans la partie amont et la vitesse d'écoulement de l'eau dans la sortie. La position de la vanne peut être adaptée à différents types de produits alimentaires.

Dans un mode de réalisation, le réceptacle comprend une partie aval comprenant un fond décalé d'un fond de la partie amont par un seuil. La hauteur du seuil peut être comprise entre un et cinq centimètres. Le seuil permet d'éviter ou à tout le moins de réduire, une éventuelle contre-pression de l'eau dans la partie aval réduisant le débit de sortie de la partie amont. Le seuil favorise la conservation d'un niveau d'eau constant dans la partie amont. Le seuil favorise une augmentation de la vitesse du flux d'eau dans la partie aval d'où une diminution du risque de contact entre deux produits alimentaires.

Dans un mode de réalisation, la partie aval comprend un fond de pente inférieure ou égale à la pente de l'écluse en position ouverte d'où une accélération du flux d'eau de traitement thermique dans l'écluse en position ouverte. Le risque de contact entre produits alimentaires est diminué.

Dans un mode de réalisation, la position de l'écluse est déterminée selon la présence d'une palette dans l'entrée du bain. Un capteur de présence de palette est monté à l'entrée du bain.

L'invention concerne également une ligne de traitement comprenant un pousseur de produits alimentaires, un cuiseur et un refroidisseur. Au moins l'un du cuiseur et du refroidisseur comprend un dispositif tel que décrit ci-dessus. Le dispositif de traitement thermique peut être disposé entre le pousseur et le cuiseur. Le dispositif de traitement thermique peut également être disposé entre le cuiseur et le refroidisseur. Dans ce cas, le liquide de traitement thermique peut être à la même température que le liquide du refroidisseur, par exemple entre -15 et 5°C. Dans le cas d'un dispositif de traitement thermique disposé en amont du cuiseur, l'eau de traitement thermique est à une température sensiblement égale à la température de l'eau du cuiseur, par exemple comprise entre 60 et 95°C.

Une ligne de traitement peut comprendre un pousseur de produits alimentaires, un pré-cuiseur, un moyen de conditionnement, un pasteurisateur et un refroidisseur. Au moins l'un du pré-cuiseur, du pasteurisateur et du refroidisseur comprend un dispositif tel que décrit ci-dessus.

Un procédé de traitement thermique de produits alimentaires peut comprendre la réception de produits alimentaires dans un réceptacle ayant une section en forme de goulotte alimentée en eau de traitement thermique, un flux dans le réceptacle entraînant les produits alimentaires, les produits alimentaires étant dirigés vers un bain par éclusée en aval du réceptacle, une position d'ouverture d'écluse laissant passer l'eau de traitement thermique et les produits alimentaires entraînés par l'eau de traitement thermique, et une position de fermeture d'écluse retenant les produits alimentaires dans de l'eau de traitement thermique ; puis le traitement thermique temporisé des produits alimentaires dans le bain comprenant un bac à eau de traitement thermique des produits alimentaires, l'entrée et la sortie desdits produits alimentaires étant commandée par des palettes, une éclusée étant synchronisée avec l'organe de temporisation avec fermeture lorsqu'une palette est en regard de l'écluse et ouverture lorsque l'accès au bain est libre.

L'invention est bien adaptée au cas des saucisses co-extrudées mais peut être utilisée pour de nombreux autres produits non formés ou conditionnés. L'invention est bien adaptée aux produits sans enveloppe, notamment légumes, boulettes, saucisses en enveloppe naturelle, émulsion sans enveloppes, crevettes, pâtes... Le dispositif permet de cuire ou refroidir à l'eau dans le respect de l'intégrité des produits des produits alimentaires.

La présente invention sera mieux comprise à l'étude de la description détaillée de quelques modes de réalisation pris à titre d'exemples nullement limitatifs et illustrés par les figures suivantes :
- la figure 1 est une vue schématique d'une ligne de traitement ;
- la figure 2 est une vue schématique d'une autre ligne de traitement ;
- les figures 3 à 5 sont des vues en coupe d'un dispositif de traitement selon différentes positions de fonctionnement ;
- les figures 6 et 7 sont des vues en perspective d'un réceptacle et d'une écluse de dispositif de traitement.

De nombreux produits alimentaires commercialisés après une cuisson ou une pré-cuisson s'avèrent particulièrement fragiles mécaniquement à l'état cru. C'est le cas des boulettes de viandes, de nombreux types de saucisses à base de viande, de poisson ou encore de végétaux. Cela est également le cas de compositions sucrées de type dessert, de compositions fromagères prêtes à consommer, etc.

La Demanderesse s'est rendue compte qu'il existait une demande latente pour une machine de traitement thermique capable de traiter par immersion dans l'eau des produits alimentaires fragiles de nature variée.

Dans le cas de produits alimentaires recouverts de gel, par exemple des saucisses pour lesquelles le gel remplace le boyau traditionnel, le fait que le gel à l'état cru soit particulièrement collant et déposé en couche mince ajoute à la fragilité mécanique du produit. Le produit alimentaire recouvert de gel, à l'état cru, est susceptible d'adhérer à de nombreuses surfaces solides. Le gel pourrait se déchirer. Les appareils de cuisson tels que proposés dans les documents EP 234068 ou GB 895101 présentent des risques de contact de produits alimentaires avec des parois et s'avèrent très difficiles à nettoyer. Il en résulte de longs et coûteux arrêts. Les documents DE 2228564 et US 3 761 290 décrivent des cuiseurs à bain d'eau chaude dans lequel les saucisses sont déplacées par un mécanisme inadapté à la réception des produits alimentaires fragiles en raison du risque de chocs ou encore de collage sur le mécanisme.

Les documents US 3700847 et US 2008/279 990 décrivent une fabrication de saucisses sur des lignes parallèles mais s'avèrent inadaptés pour des produits alimentaires collants et fragiles. Les lignes parallèles occupent une longueur importante de bâtiment, ce qui s'avère coûteux.

La Demanderesse a mis au point un dispositif permettant de recevoir et de cuire des produits alimentaires collants, fragiles ou les deux. Le dispositif de traitement thermique permet de cuire par immersion dans l'eau ce qui offre un rendement énergétique bien meilleur que la vapeur. Le dispositif de traitement thermique reçoit les produits alimentaires en provenance d'une machine disposée à l'amont, dans l'eau de traitement thermique d'où un début immédiat de la diminution des propriétés collantes et/ou, de la fragilité du produit alimentaire. Le produit alimentaire est reçu dans de l'eau, de traitement thermique et maintenu dans de l'eau de traitement thermique jusqu'au bain de cuisson tout en étant transporté par ladite eau de traitement thermique.

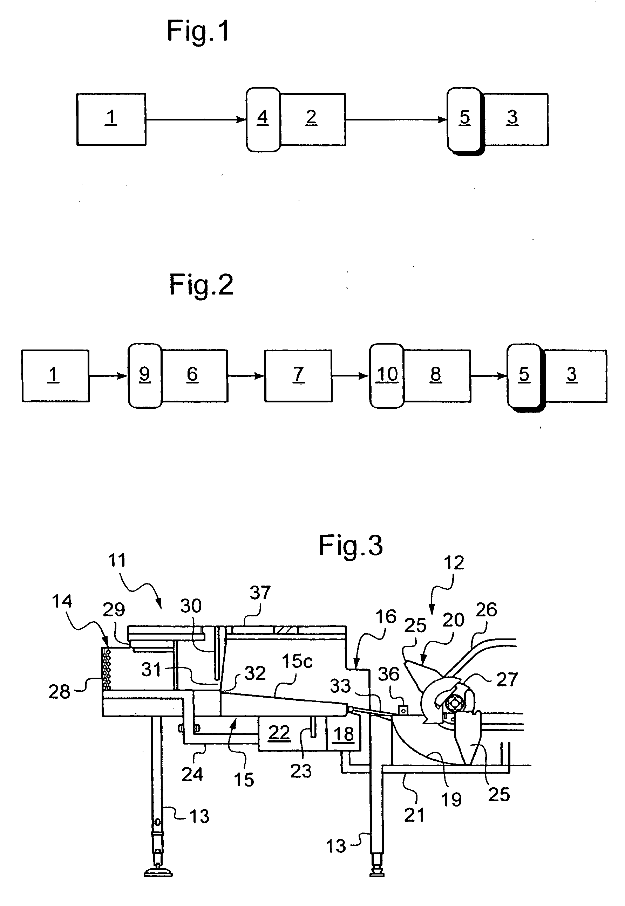

Dans le mode de réalisation illustré sur la figure 1, une ligne de traitement comprend un pousseur de produit alimentaire 1 recevant en entrée une matière première ou une matière semi finie. Le pousseur 1 fournit en sortie un produit alimentaire cru. En aval du pousseur 1, la ligne comprend un cuiseur 2 recevant les produits alimentaires crus provenant du pousseur 1. Le cuiseur 2 est muni d'un dispositif de traitement thermique 4 tel que décrit ci-après. Le cuiseur 2 fournit en sortie un produit alimentaire cuit. La ligne de traitement comprend également un refroidisseur 3. Le refroidisseur 3 reçoit en entrée les produits alimentaires cuits en provenance du cuiseur 2. Le refroidisseur 3 est ici équipé d'un dispositif de traitement thermique 5. Les dispositifs de traitement thermique 4 et 5 peuvent être du type identique avec des liquides de traitement thermique adaptés à la cuisson pour le dispositif de traitement thermique 4 et au refroidissement pour le dispositif de traitement thermique 5. La ligne de traitement peut être pourvue seulement du dispositif de traitement thermique 4 ou seulement du dispositif de traitement thermique 5. Le refroidisseur 3 fournit en sortie les produits alimentaires à température de conservation. Les produits alimentaires peuvent ensuite être stockés en chambre froide ou faire l'objet d'autres traitements sur d'autres machines non représentées.

Dans le mode de réalisation illustré sur la figure 2, la ligne de traitement thermique comprend un pousseur 1, un pré-cuiseur 6, une machine de conditionnement 7, un pasteurisateur 8 et un refroidisseur 3, disposés dans cet ordre. Le pousseur 1 et le refroidisseur 3 peuvent être du même type que dans le mode de réalisation précédent. Le pré-cuiseur 6 est ici muni d'un dispositif de traitement thermique 9. Le pré-cuiseur 6 peut être d'un type analogue au cuiseur 2 du mode de réalisation de la figure 1. Le pré-cuiseur 6 peut assurer une pré-cuisson d'une durée inférieure à la durée de cuisson par le cuiseur 2. Le pré-cuiseur 6 fournit en sortie des produits alimentaires précuits à la machine de conditionnement 7. La machine de conditionnement 7 recouvre lesdits produits alimentaires d'un conditionnement ou emballage assurant en général une protection mécanique et bactériologique. Les produits alimentaires peuvent être conditionnés à l'unité ou par lot. Les produits alimentaires peuvent être conditionnés entre deux feuilles de matériau synthétique, par exemple à base de polyéthylène. La machine de conditionnement 7 fournit en sortie les produits alimentaires conditionnés. Le pasteurisateur 8 est muni d'un dispositif de traitement thermique 10 en vue de l'obtention de valeurs pasteurisatrices suffisantes. Le pasteurisateur 8 est configuré pour satisfaire les normes en vigueur qui peuvent exiger une température, une température à coeur, ou encore une durée à température. Le pasteurisateur 8 fournit en sortie les produits alimentaires conditionnés et pasteurisés ayant une température relativement élevée. Le refroidisseur 3 muni du dispositif de traitement thermique 5 reçoit les produits alimentaires provenant du pasteurisateur 8 et assure leur refroidissement à une température de conservation. Les dispositifs de traitement thermique 9, 10 et 5 de la ligne de traitement thermique de la figure 2 peuvent être présents selon différentes combinaisons, au nombre de 1, 2 ou 3 dans ladite ligne de traitement thermique.

Les dispositifs de traitement thermique 4, 9 et 10 assurent un traitement par application de chaleur. Les dispositifs de traitement thermique 4, 9 et 10 fonctionnent en général à l'eau. Le dispositif de traitement thermique 5 assure un traitement par application de froid. Le dispositif de traitement thermique 5 peut fonctionner à l'eau additionnée de sel ou autre additif permettant de descendre la température de ladite saumure en dessous de 0°C.

Dans le mode de réalisation illustré sur les figures 3 à 5, le dispositif de traitement thermique 4 comprend un réceptacle 11 et un bain de traitement thermique 12 disposé à l'aval du réceptacle 11. Le réceptacle 11 peut présenter une forme générale de table reposant sur des pieds 13. Le réceptacle 11 présente une section transversale en forme générale de goulotte. La goulotte comprend un fond et deux parois latérales. Le réceptacle 11 comprend une alimentation en eau de traitement thermique 14 fournissant de l'eau de traitement thermique dans une partie amont 14 dudit réceptacle en vue d'un écoulement vers une partie aval 15. Le dispositif comprend une écluse 16 disposée en aval du réceptacle 11 dans le sens d'écoulement de l'eau de traitement thermique. Le bain de traitement thermique 12 est disposé à l'aval de l'écluse 16. En d'autres termes, l'eau de traitement thermique est fournie dans la partie amont 14, s'écoule dans la partie aval 15, dans l'écluse 16 puis rejoint le bain de traitement thermique 12. Le bain de traitement thermique 12 peut être à niveau sensiblement constant d'eau de traitement thermique. A cet effet, le bain de traitement thermique peut comprendre un trop plein 17 récupérant l'eau de traitement thermique en excès dans ledit bain 12. Le trop plein 17 peut être relié à une pompe 18 débouchant dans l'alimentation en eau de traitement thermique 14. La sortie de la pompe 18 peut être dirigée en totalité vers l'alimentation en eau de traitement thermique 14. Alternativement, la sortie de la pompe 18 peut être dirigée en partie vers l'alimentation en eau de traitement thermique 14 et en partie vers le bain de traitement thermique 12 en vue d'assurer une agitation de l'eau de traitement thermique dans le bain 12. Une bonne homogénéité de température dans le bain 12 est obtenue.

Le bain de traitement thermique 12 comprend un bac 19 à eau de traitement thermique ouvert sur le dessus et configuré pour offrir une profondeur d'eau de traitement thermique suffisante pour la cuisson des produits alimentaires et une température d'eau de traitement thermique suffisamment homogène. Le trop plein 17 est disposé dans ou au bord du bac 19. Le trop plein 17 est relié à la pompe 18 par une conduite 21. A la pompe 18, peut être associé un stockage 22 d'eau de traitement thermique. Le stockage 22 d'eau de traitement thermique peut comprendre un élément de chauffage 23, par exemple un échangeur thermique ou une résistance électrique. Une conduite 24 est montée entre la pompe 18 ou le stockage 22 et la partie amont 14 du réceptacle 11 pour ainsi envoyer l'eau de traitement thermique dans le réceptacle 11.

Le bain de traitement thermique 12 comprend également un organe de temporisation 20. L'organe de temporisation 20 comprend un mécanisme sans fin. L'organe de temporisation 20 comprend une pluralité de palettes 25 transversales par rapport au sens de déplacement des produits alimentaires. Les palettes 25 sont supportées à chacune de leurs extrémités par une chaîne se déplaçant dans un rail 26. Des roues dentées 27 assurent l'entraînement de la chaîne dans le rail 26. Les palettes 25 se déplacent selon une partie supérieure de trajectoire hors de l'eau de traitement thermique et une partie inférieure de trajectoire en contact avec l'eau de traitement thermique. La hauteur d'eau du bac 19 est sensiblement constante afin de favoriser l'homogénéité de la température. Les extrémités longitudinales du bac 19 sont arrondies afin d'épouser la course de l'extrémité correspondante des palettes 25 tout en laissant un faible espace entre les parois du bac 19 et les extrémités inférieures des palettes 25. On entend ici par extrémités inférieures des palettes 25, l'extrémité qui se trouve en position inférieure lorsque la palette 25 est en contact avec l'eau de traitement thermique. Le trop plein 17 peut être disposé sur un des bords du bac 19, au-delà des palettes 25. Les palettes 25 sont déplacées dans le sens illustré par la flèche de la figure 3.

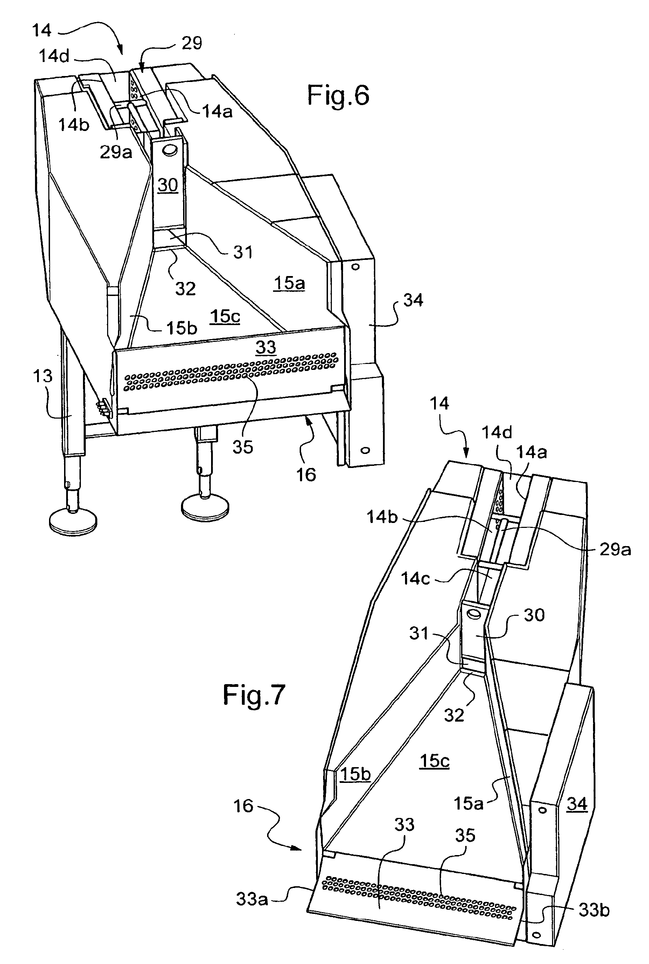

Le réceptacle 11 et l'écluse 16 sont illustrés plus en détail sur les figures 6 et 7. La partie amont 14 du réceptacle 11 comprend des bords latéraux 14a et 14b sensiblement parallèles, un fond 14c sensiblement horizontal ou en légère pente vers l'aval, une paroi amont 14d et une alimentation en eau de traitement thermique 28. L'alimentation en eau de traitement thermique 28 comprend une pluralité de trous disposés en une ou plusieurs rangées alignées verticalement et ménagés dans les parois latérales 14a et 14b à proximité de la paroi amont 14d. Les parois latérales 14a et 14b peuvent appartenir à une cassette 29 manipulable au moyen d'une poignée 29a et permettant une répartition de l'eau de traitement thermique provenant de la conduite 24 vers les trous ménagés dans les parois latérales 14a et 14b. De préférence, lesdits trous sont sensiblement symétriques formant une alimentation en eau bilatérale. On favorise ainsi un écoulement de l'eau de traitement thermique de l'amont vers l'aval en réduisant d'éventuelles zones de stagnation d'eau de traitement thermique.

La partie amont 14a présente une forme de couloir, par exemple étroit et haut. Les dimensions de largeur et de hauteur du couloir ainsi formé peuvent être déterminées par le diamètre et la densité des produits alimentaires à traiter thermiquement. On limite ainsi les risques de choc entre les produits alimentaires et les parois de la partie amont 14. La partie amont 14 comprend également une vanne 30 formant paroi aval. La vanne 30 laisse ouvert un passage formant une sortie 31 pour l'eau de traitement thermique. La sortie 31 est axiale au sens de déplacement de l'eau de traitement thermique et des produits alimentaires. La vanne 30 peut être réglée en fonction du niveau d'eau de traitement thermique souhaité dans le couloir de la partie amont 14, du diamètre des produits alimentaires, de la vitesse d'éjection souhaitée pour les produits alimentaires, etc. La sortie 31 présente une forme rectangulaire. La vanne 30 se présente sous la forme d'une pièce rectangulaire munie en partie supérieure d'un perçage facilitant la préhension. Le réglage en hauteur de la vanne 30 peut être effectué manuellement. Le serrage peut être obtenu par une vis de maintien en position de ladite vanne 30.

La partie aval 15 du réceptacle s'étend à partir de la vanne 30. La partie aval 15 comprend des parois latérales 15a et 15b symétriques et divergentes vers l'aval, et une paroi de fond 15c de forme trapézoïdale. La paroi de fond 15c est inclinée vers l'aval, notamment d'un angle compris entre 5° et 25°. Les parois latérales 15a et 15b se raccordent aux parois latérales de la partie amont 14 par soudure ou encore par pliage d'une tôle unique. La paroi de fond 15c se raccorde à la paroi de fond 14c de la partie amont 14, directement ou éventuellement avec un ressaut 32 formant un seuil. Le ressaut 32 présente une hauteur comprise entre 1 et 5 cm. Le ressaut 32 peut être vertical.

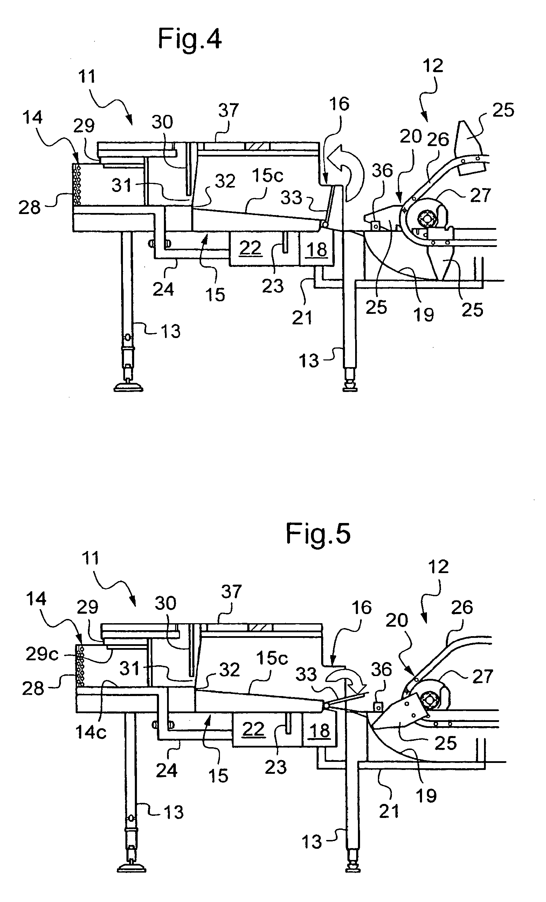

La partie aval 15 rejoint l'écluse 16 vers l'aval. L'écluse 16 comporte des parois latérales et de fond communes avec la partie aval 15. L'écluse 15 comporte une porte 33 basculante. La porte 33 est montée à pivotement autour d'un axe sensiblement horizontal. Ledit axe est disposé à un niveau très légèrement inférieur au niveau de la paroi de fond 15c. En position ouverte, la porte 33 peut affleurer la paroi de fond 15c. En position ouverte, la porte 33 est disposée à l'aval dudit axe de basculement. En position de fermeture, la porte 33 est redressée vers le haut en étant sensiblement perpendiculaire à la paroi de fond 15c, voir figure 4. Le basculement de la porte 33, entre la position d'ouverture et la position de fermeture, est assuré par une motorisation ou un vérin disposée dans un boîtier 34 monté voisin de la partie aval 15 et de l'écluse 16.

La porte 33 se présente sous la forme d'un rectangle dont la longueur est disposée transversalement au sens de progression de l'eau de traitement thermique et des produits alimentaires. Des petits côtés 33a et 33b de la porte 33 sont redressés vers le haut à l'état de fermeture. Les petits côtés 33a et 33b sont à une distance des parois latérales 15a et 15b nettement inférieure au diamètre des produits alimentaires. La distance peut être comprise entre 0,5 et 2 mm. La porte 33 ouverte est disposée avec une pente sensiblement égale ou légèrement supérieure à la pente de la paroi de fond 15c de la partie aval 15. Le freinage de l'eau de traitement thermique passant au-dessus de la porte 33 en position d'ouverture est ainsi évité.

Une pluralité de perçages 35 sont ménagés dans la porte 33. Dans le mode de réalisation représenté, les perçages 35 sont disposés en trois rangées parallèles à la longueur de la porte 33. Les perçages 35 sont disposés sensiblement entre le tiers et les deux tiers de la largeur de ladite porte 33. Les perçages 35 permettent le passage d'eau de traitement thermique tout en s'opposant au passage des produits alimentaires. On évite ainsi un débordement de l'eau de traitement thermique par-dessus le bord supérieur de la porte 33 en position de fermeture, débordement qui risquerait d'entraîner des produits alimentaires. Ainsi, la porte 33 en position de fermeture comprend une partie inférieure pleine, une partie intermédiaire ajourée et une partie supérieure pleine favorisant une accumulation suffisante d'eau de traitement thermique pour assurer l'immersion des produits alimentaires tout en évitant un débordement indésirable.

La position de la porte 33 de l'écluse 16 est indexée sur la présence ou l'absence d'une palette 25 en regard de l'écluse 16 et susceptible de former un obstacle pour des produits alimentaires entraînés par l'eau de traitement thermique, de la partie aval 15 et de l'écluse 16 vers le bac 19. A cet effet, le bain de traitement thermique 12 est muni d'un capteur 36 de présence d'une palette 25 au débouché de l'écluse 16. Le capteur 36 peut comprendre une cellule photoélectrique ou un dispositif mécanique. Le capteur 36 est relié au boîtier 34 de motorisation de la porte 33 de l'écluse 16. Dans la position illustrée sur la figure 4, une palette 25 se trouve en face du capteur 36. La palette 25 est également en face du réceptacle 11 et de l'écluse 16. L'accès au bain de traitement thermique 12 n'est donc pas souhaitable pour les produits alimentaires. Le capteur 36 détecte la présence de la palette 25 et provoque, via le boîtier de motorisation 34, le basculement de la porte 33 dans le sens illustré par la flèche de la figure 4 jusqu'à la position de fermeture. L'organe de temporisation 20 comprend également une palette 25 en contact avec l'eau de traitement thermique du bac 19 et dont le déplacement provoque le déplacement correspondant des produits alimentaires présents dans l'eau de traitement thermique en amont de ladite palette 25 devant le capteur 36. Une autre palette 25 est sur la trajectoire de retour hors de l'eau de traitement thermique.

Dans la position de fermeture de la porte 33, l'eau de traitement thermique et les produits alimentaires en provenance de la sortie 31, s'accumulent dans l'écluse 16. Une partie de l'eau coule par les perçages 35 ménagés dans la porte 33. L'accumulation d'eau dans l'écluse 16 est suffisante pour la poursuite du traitement thermique des produits alimentaires et pour éviter des chocs entre produits alimentaires ou des produits alimentaires contre les parois.

Puis, l'organe de temporisation 20 poursuit son mouvement. La palette 25 s'engage dans le bac 19, voir figure 5. Le capteur 36 est libéré de la palette 25 et commande par l'intermédiaire du boîtier de motorisation 34 le basculement de la porte 33 dans le sens illustré par la flèche de la figure 5. La porte 33 est ici illustrée dans une position avancée de basculement, assez proche de la position d'ouverture. Dans la position représentée, l'eau accumulée commence déjà à s'écouler par-dessus la porte 33. Les produits alimentaires suivent le mouvement de l'eau de traitement thermique. On parvient à la position d'ouverture illustrée sur la figure 3. La porte 33 est alors ouverte, dans une position sensiblement alignée avec le fond 15c de la partie aval 15, voire avec une pente légèrement supérieure afin d'éviter un ralentissement de l'eau de traitement thermique et des produits alimentaires. L'accès au bac 19 est libre. Le capteur 36 est dégagé. Une palette 25 est déjà engagée dans le bac 19 sur une portion horizontale de sa trajectoire correspondant à une portion horizontale du rail 26. La palette 25 suivante poursuit sa trajectoire de retour sur une portion oblique descendante du rail 26. La palette suivante 25 ne gêne pas le déplacement des produits alimentaires provenant du réceptacle 11 et de l'écluse 16 dans le bac 19.

Le réceptacle 11 et l'écluse 16 sont munis de parois de fond et latérales étanches de sorte que l'eau de traitement thermique injectée par l'alimentation 28 s'écoule dans le bac 19. Le réceptacle 11 et l'écluse 16 peuvent être recouverts par des couvercles 37 en vue d'une bonne isolation thermique et d'une protection des produits alimentaires. Le réceptacle 11 présente un fonctionnement sensiblement continu avec une alimentation en eau continue et une alimentation en produits alimentaires à haute cadence, par exemple supérieure à 200 unités par minute.

L'écluse 16 permet une interruption momentanée, par exemple pendant quelques secondes, de l'alimentation du bain de traitement thermique 12 en produits alimentaires, laissant le temps à une palette 25 de dégager un espace d'entrée de produits alimentaires dans le bain de traitement thermique 12. Les palettes 25 peuvent être à déplacement à vitesse constante.

Le niveau d'eau de traitement thermique dans la partie amont 14 est déterminé par l'alimentation en eau 28, et la position de la vanne 30. Ceci permet de recevoir des produits alimentaires provenant du haut en limitant le risque de choc et de détérioration de l'enveloppe du produit alimentaire. Par ailleurs, le produit alimentaire chutant dans l'eau de traitement thermique de la partie amont a tendance à rester à proximité de la paroi de fond 14c en raison des filets d'eau se dirigeant vers la sortie 31. Toutefois, il peut arriver que certains produits alimentaires, notamment allongés, se retournent dans la partie amont 14. Il est intéressant de prévoir une sortie 31 de dimensions suffisantes pour laisser passer deux produits alimentaires en même temps. Une fois passés par la sortie 31, les produits alimentaires accélèrent en raison de la légère chute provoquée par la présence du ressaut qui offre une différence de niveau entre le fond 14c et le fond 15c et d'autre part par l'inclinaison du fond 15c. L'eau de traitement thermique a alors tendance à accélérer et à s'étaler sur la largeur croissante de la partie aval 15. Les produits alimentaires s'écartent les uns des autres en raison de l'accélération de l'eau de traitement thermique et se répartissent également sur la largeur croissante de la partie aval 15. En position d'ouverture de l'écluse 16, les produits alimentaires sont amenés directement par l'eau de traitement thermique dans le bain de traitement thermique 12. Les produits alimentaires sont déjà répartis sur une largeur significative du bac à leur entrée dans le bain. En position de fermeture de l'écluse 16, les produits alimentaires sont temporairement stockés en amont de la porte 33 avec un bassin formé par l'eau de traitement thermique retenue par ladite porte 33.

## Revendications

1. Dispositif de traitement thermique (4, 5, 9, 10) de produits alimentaires, **caractérisé par le fait qu'**il comprend un réceptacle (11) destiné à recevoir des produits alimentaires, un bain de traitement thermique (12) à l'aval du réceptacle, le réceptacle (11) ayant une section en forme de goulotte, une alimentation en eau de traitement thermique (28) avec entraînement desdits produits alimentaires par l'eau dans le réceptacle, et une écluse (16) disposée en aval du réceptacle, ladite écluse (16) ayant au moins une position d'ouverture laissant passer l'eau de traitement thermique et les produits alimentaires entraînés par l'eau de traitement thermique, et une position de fermeture retenant les produits alimentaires dans de l'eau de traitement thermique, le bain de traitement thermique (12) comprenant un bac (19) à eau de traitement thermique disposé en aval de l'écluse (16), et un organe de temporisation (20) de durée de traitement thermique, ledit organe de temporisation (20) étant pourvu de palettes (25), l'écluse (16) étant synchronisée avec ledit organe de temporisation (20) en position de fermeture lorsqu'une palette (25) est en regard de l'écluse (16) et en position d'ouverture lorsque l'accès au bac (19) à eau de traitement thermique est libre.

2. Dispositif selon la revendication 1, dans lequel l'alimentation en eau de traitement thermique est continue.

3. Dispositif selon la revendication 1 ou 2, dans lequel le réceptacle (11) est évasé vers l'aval.

4. Dispositif selon l'une des revendications précédentes, dans lequel le réceptacle (11) comprend une partie voisine de l'écluse (16), inclinée vers l'aval, de préférence d'inclinaison comprise entre 5 et 25°.

5. Dispositif selon l'une des revendications précédentes, dans lequel l'écluse (16) comprend une porte (33) articulée sur un axe horizontal.

6. Dispositif selon la revendication 5, dans lequel la porte (33), en position d'ouverture de l'écluse, est située à l'aval dudit axe horizontal.

7. Dispositif selon l'une des revendications précédentes, dans lequel l'écluse (16) comprend une porte (33) munie de perçages (35) d'écoulement d'eau.

8. Dispositif selon l'une des revendications précédentes, dans lequel l'écluse (16) comprend une porte (33) présentant des bords latéraux (33a, 33b) situés à une distance de bords fixes (15a, 15b) correspondants indépendante de la position de la porte.

9. Dispositif selon l'une des revendications précédentes, dans lequel ledit organe de temporisation (20) assure en outre une fonction d'entraînement, une fonction de groupage, et une fonction d'extraction des produits alimentaires en sortie.

10. Dispositif selon l'une des revendications précédentes, dans lequel le réceptacle (11) comprend une partie amont (14) à niveau d'eau de traitement thermique indépendant de la position de l'écluse (16), ladite partie amont (14) comprenant une entrée d'eau de traitement thermique latérale par rapport au déplacement des produits alimentaires et une sortie axiale d'eau de traitement thermique et de produits alimentaires, l'entrée d'eau de traitement thermique étant bilatérale, ladite partie amont (14) comprend une ouverture supérieure de réception des produits alimentaires, un fond (14c) et une sortie (31) d'eau de traitement thermique et de produits alimentaires vers l'écluse (16), ladite sortie (31) étant configurée pour une vitesse d'écoulement sensiblement égale à la vitesse des produits alimentaires en entrée, ladite partie amont (14) comprenant une vanne (30) de réglage de ladite sortie.

11. Dispositif selon la revendication 10, dans lequel le réceptacle (11) comprend une partie aval (15) comprenant un fond (15c) décalé d'un fond (14c) de la partie amont (14) par un seuil.

12. Dispositif selon l'une des revendications 10 à 11, dans lequel le réceptacle (11) comprend une partie aval (15) comprenant un fond de pente inférieure ou égale à la pente de l'écluse (16) en position ouverte.

13. Ligne de traitement comprenant un pousseur de produits alimentaires (1), un cuiseur (2), et un refroidisseur (3), au moins l'un du cuiseur et du refroidisseur comprenant un dispositif (4, 5) selon l'une des revendications précédentes.

14. Ligne de traitement comprenant un pousseur de produits alimentaires (1), un précuiseur (6), une machine de conditionnement (7), un pasteurisateur (8) et un refroidisseur (3), au moins l'un du pré-cuiseur, du pasteurisateur et du refroidisseur comprenant un dispositif (9, 10, 5) selon l'une des revendications 1 à 12.

15. Procédé de traitement thermique de produits alimentaires, comprenant :
- la réception de produits alimentaires dans un réceptacle (11) ayant une section en forme de goulotte alimenté en eau de traitement thermique, un flux dans le réceptacle (11) entraînant lesdits produits alimentaires, lesdits produits alimentaires étant dirigés vers un bain (12) par éclusées en aval du réceptacle, une position d'ouverture d'écluse (16) laissant passer l'eau de traitement thermique et les produits alimentaires entraînés par l'eau de traitement thermique, et une position de fermeture d'écluse (16) retenant les produits alimentaires dans de l'eau de traitement thermique puis,
- le traitement thermique temporisé des produits alimentaires dans le bain (12) comprenant un bac (19) à eau de traitement thermique des produits alimentaires, l'entrée et la sortie desdits produits alimentaires étant commandée par des palettes (25), l'éclusée étant synchronisée avec ledit organe de temporisation avec fermeture lorsqu'une palette est en regard de l'écluse et ouverture lorsque l'accès au bain est libre.

## Patentansprüche

1. Vorrichtung zur Wärmebehandlung (4, 5, 9, 10) von Lebensmitteln, **gekennzeichnet durch** die Tatsache, dass sie einen Behälter (11) aufweist, der dazu bestimmt ist, Lebensmittel aufzunehmen, ein dem Behälter nachgeordnetes Wärmebehandlungsbad (12), wobei der Behälter (11) einen Abschnitt in Rinnenform hat, eine Wärmebehandlungswasserzufuhr (28) unter Mitnahme der Lebensmittel durch das Wasser in den Behälter und eine Schleuse (16), die dem Behälter nachgeordnet angeordnet ist, wobei die Schleuse (16) mindestens eine Öffnungsposition hat, die das Wärmebehandlungswasser und die **durch** das Wärmebehandlungswasser mitgenommenen Lebensmittel passieren lässt, und eine Schließposition, die die Lebensmittel in dem Wärmebehandlungswasser zurückhält, wobei das Wärmebehandlungsbad (12) eine Wanne (19) für das Wärmebehandlungswasser aufweist, die der Schleuse (16) nachgeordnet angeordnet ist, und ein Verzögerungsorgan (20) für die Wärmebehandlungsdauer, wobei das Verzögerungsorgan (20) mit Schaufeln (25) ausgestattet ist, wobei die Schleuse (16) mit dem Verzögerungsorgan (10) in Schließposition, wenn sich eine Schaufel (25) gegenüber der Schleuse (16) befindet, und in Öffnungsposition, wenn der Zugang zu der Wanne (19) für das Wärmebehandlungswasser frei ist, synchronisiert ist.

2. Vorrichtung nach Anspruch 1, wobei die Wärmebehandlungswasserzufuhr durchgehend ist.

3. Vorrichtung nach Anspruch 1 oder 2, wobei der Behälter (11) nach vorne aufgeweitet ist.

4. Vorrichtung nach einem der vorhergehenden Ansprüche, wobei der Behälter (11) einen der Schleuse (16) benachbarten Teil aufweist, der nach vorne geneigt ist, wobei die Neigung bevorzugt zwischen 5 und 25 ° beträgt

5. Vorrichtung nach einem der vorhergehenden Ansprüche, wobei die Schleuse (16) eine Tür (33) aufweist, die an einer horizontalen Achse gelenkig angebracht ist.

6. Vorrichtung nach Anspruch 5, wobei sich die Tür (33) in Offnungsposition der Schleuse der horizontalen Achse nachgeordnet befindet.

7. Vorrichtung nach einem der vorhergehenden Ansprüche, wobei die Schleuse (16) eine Tür (33) aufweist, die mit Wasserabflussbohrungen (35) versehen ist.

8. Vorrichtung nach einem der vorhergehenden Ansprüche, wobei die Schleuse (16) eine Tür (33) aufweist, die seitliche Ränder (33a, 33b) aufweist, die sich in einem Abstand von entsprechenden festen Rändern (15a, 15b) befinden, der von der Position der Tür unabhängig ist.

9. Vorrichtung nach einem der vorhergehenden Ansprüche, wobei das Verzögerungsorgan (20) des Weiteren eine Mitnahmefunktion, eine Gruppierungsfunktion und eine Austragfunktion der Lebensmittel am Auslass sicherstellt.

10. Vorrichtung nach einem der vorhergehenden Ansprüche, wobei der Behälter (11) einen vorgeordneten Teil (14) mit einem von der Position der Schleuse (16) unabhängigen Niveau des Wärmebehandlungswassers aufweist, wobei der vorgeordnete Teil (14) einen Wärmebehandlungswassereinlass, der in Bezug auf die Bewegung der Lebensmittel seitlich ist, und einen axialen Auslass für Wärmebehandlungswasser und Lebensmittel aufweist, wobei der Wärmebehandlungswassereinlass beiderseitig ist, der vorgeordnete Teil (14) eine obere Aufnahmeöffnung für die Lebensmittel, einen Boden (14c) und einen Auslass (31) für Wärmebehandlungswasser und Lebensmittel zur Schleuse (16) hin aufweist, wobei der Auslass (31) für eine Abfließgeschwindigkeit ausgelegt ist, die im Wesentlichen gleich der Geschwindigkeit der Lebensmittel am Einlass ist, wobei der vorgeordnete Teil (14) ein Regelventil (30) für den Auslass aufweist.

11. Vorrichtung nach Anspruch 10, wobei der Behälter (11) einen nachgeordneten Teil (15) aufweist, der einen Boden (15c) aufweist, der um einen Boden (14c) von dem vorgeordneten Teil (14) durch eine Schwelle versetzt ist.

12. Vorrichtung nach einem der Ansprüche 10 bis 11, wobei der Behälter (11) einen nachgeordneten Teil (15) aufweist, der einen Boden mit einer Schräge aufweist, die kleiner oder gleich der Schräge der Schleuse (16) in geöffneter Position ist.

13. Behandlungsanlage, die eine Schiebevorrichtung (1) für Lebensmittel, eine Kocheinrichtung (2) und eine Kühleinrichtung (3) aufweist, wobei mindestens eine der Kocheinrichtung und der Kühleinrichtung eine Vorrichtung (4, 5) nach einem der vorhergehenden Ansprüche aufweist.

14. Behandlungsanlage, die eine Schiebevorrichtung (1) für Lebensmittel, eine Vorkocheinrichtung (6), eine Verpackungsmaschine (7), Pasteurisiereinrichtung (8) und eine Kühleinrichtung (3) aufweist, wobei mindestens eine der Vorkocheinrichtung, der Pasteurisiereinrichtung und der Kühleinrichtung eine Vorrichtung (9, 10, 5) nach einem der Ansprüche 1 bis 12 aufweist.

15. Verfahren zur Wärmebehandlung von Lebensmitteln, das aufweist:
- die Aufnahme von Lebensmitteln in einem Behälter (11), der einen Abschnitt in Ablaufrinnenform hat, wobei ihm Wärmebehandlungswasser zugeführt wird, wobei ein Strom in dem Behälter (11) die Lebensmittel mitnimmt, wobei die Lebensmittel mittels dem Behälter nachgeordneten Schleusen zu einem Bad (12) geleitet werden, wobei eine Öffnungsposition der Schleuse (16) das Wärmebehandlungswasser und die durch das Wärmebehandlungswasser mitgenommenen Lebensmittel passieren lässt, und eine Schließposition der Schleuse (16) die Lebensmittel in dem Wärmebehandlungswasser zurückhält, und
- wobei die verzögerte Wärmebehandlung der Lebensmittel in dem Bad (12) eine Wanne (19) für das Wärmebehandlungswasser der Lebensmittel aufweist, wobei der Einlass und der Auslass der Lebensmittel durch Schaufeln (25) gesteuert werden, wobei die Schleuse mit dem Verzögerungsorgan in Schließung synchronisiert wird, wenn sich eine Schaufel gegenüber der Schleuse befindet, und in Öffnung, wenn der Zugang zum Bad frei ist.

## Claims

1. Device (4, 5, 9, 10) for thermally processing food products, **characterized in that** it comprises a receptacle (11) intended to receive food products, a thermal processing bath (12) downstream of the receptacle, the receptacle (11) having a cross-section in the form of a chute, a supply of thermal processing water (28) with the food products being moved into the receptacle by the water, and a sluice (16) arranged downstream of the receptacle, said sluice (16) having at least one open position which allows the thermal processing water and the food products moved by the thermal processing water to pass, and a closed position which retains the food products in thermal processing water, the thermal processing bath (12) comprising a thermal processing water vessel (19) which is arranged downstream of the sluice (16), and a member (20) for timing the duration of the thermal processing operation, said timing member (20) being provided with vanes (25), the sluice (16) being synchronized with said timing member (20) in closed position when a vane (25) is opposite the sluice (16) and in open position when the access to the thermal processing water vessel (19) is free.

2. Device according to claim 1, wherein the supply of thermal processing water is continuous.

3. Device according to claim 1 or 2, wherein the receptacle (11) is flared in a downstream direction.

4. Device according to any of the preceding claims, wherein the receptacle (11) comprises a portion which is adjacent to the sluice (16) and which is inclined in a downstream direction, preferably with an inclination of between 5 and 25°.

5. Device according to any of the preceding claims, wherein the sluice (16) comprises a door (33) which is articulated to a horizontal shaft.

6. Device according to claim 5, wherein the door (33), in the open position of the sluice, is located downstream of the horizontal shaft.

7. Device according to any of the preceding claims, wherein the sluice (16) comprises a door (33) which is provided with holes (35) for the flow of water.

8. Device according to any of the preceding claims, wherein the sluice (16) comprises a door (33) which has lateral edges (33a, 33b) which are located at a distance from corresponding fixed edges (15a- 15b) that is independent of the position of the door.

9. Device according to any of the preceding claims, wherein said timing member (20) realizes also a drive function, a grouping function, and a function of extraction of the food products at the exit.

10. Device according to any of the preceding claims, wherein the receptacle (11) comprises an upstream portion (14) having a level of thermal processing water independent of the position of the sluice (16), said upstream portion (14) comprising an inlet for thermal processing water which is lateral relative to the movement of the food products and an axial outlet for thermal processing water and food products, the inlet for thermal processing water being bilateral, said upstream portion (14) comprising an upper opening for receiving food products, a base (14c) and an outlet (31) for thermal processing water and food products in the direction towards the sluice (16), said outlet (31) being configured for a flow speed which is substantially equal to the speed of the food products at the inlet, said upstream portion (14) comprising an adjustment valve (30) for the outlet.

11. Device according to claim 10, wherein the receptacle (11) comprises a downstream portion (15) which comprises a base (15c) which is offset from a base (14c) of the upstream portion (14) by a step.

12. Device according to of claim 10 or 11, wherein the receptacle (11) comprises a downstream portion (51) which comprises a base having an inclination which is less than or equal to the inclination of sluice (16) in the open position.

13. Processing line comprising a pushing device (1) for food products, a cooker (2) and a cooler (3), at least one of the cooker and the cooler comprising a device (4, 5) according to one of the preceding claims.

14. Processing line comprising a pushing device (1) for food products, a pre-cooker (6), a packaging machine (7), a pasteuriser (8) and a cooler (3), at least one of the pre-cooker, the pasteuriser and the cooler comprising a device (9, 10, 5) according to one of the claims 1 to 12.

15. Method for thermally processing food products, comprising:
- the reception of food products in a receptacle (11) having a cross-section in the form of a chute supplied with thermal processing water, a flow in the receptacle (11) moving said food products, said food products being driven towards a thermal processing bath (12) through a sluice (16) downstream of the receptacle, an open position of the sluice (16) allowing the thermal processing water and the food products moved by the thermal processing water to pass, and a closed positon of the sluice (16) retaining the food products in thermal processing water, then
- the temporized thermal processing of the food products in the bath (12) comprising a thermal processing water vessel (19) for the food products, the entry and the exit of said food products being driven by vanes (25), the sluice being synchronized with said timing member in closed position when a vane is opposite the sluice and in open position when the access to the bath is free.
